# EUROPEAN PATENT APPLICATION

(11) **EP 2 722 961 A1**
(43) Date of publication of application: **23.04.2014**
(21) Application number: 11867838.2
(22) Date of filing: 17.06.2011
(51) Int. Cl.: H02J 7/00

(54) **POWER SUPPLY SYSTEM AND VEHICLE EQUIPPED WITH SAME, AND POWER SUPPLY SYSTEM CONTROL METHOD**

(71) Applicant: TOYOTA JIDOSHA KABUSHIKI KAISHA, Toyota-shi, Aichi-ken, 471-8571 (JP)
(72) Inventor: SAKAMOTO, Yosei, Toyota-shi Aichi 471-8571 (JP); ANG, Wanleng, Toyota-shi Aichi 471-8571 (JP)
(74) Representative: Winter, Brandl, Fürniss, Hübner, Röss, Kaiser, Polte - Partnerschaft
(86) International application number: PCT/JP2011/063940
(87) International publication number: WO 2012/172685

(57) **Abstract**

A first opening/closing device (SMRB1, SMRG1, SMRP, R1) is configured to include a precharging relay (SMRP) and a limiting resistor (R1) connected in series between a first power storage unit (BAT1) and a first pair of power lines (PL1, NL1). A second opening/closing device (SMRB2, SMRG2) is configured not to include the precharging relay (SMRP) and the limiting resistor (R1). When precharging a capacitor C1 using a second power storage unit (BAT2), a control device controls opening/closing of first to fourth opening/closing devices (SMRB1, SMRG1, SMRP, R1, SMRB2, SMRG2, CHRB1, CHRG1, CHRB2, CHRG2) so as to form an electric conduction path extending between the second power storage unit (BAT2) and the capacitor (C1) via the precharging relay (SMRP) and the limiting resistor (R1).

## Description

### TECHNICAL FIELD

The present invention relates to a power source system, a vehicle including the power source system, and a method for controlling the power source system. More particularly, the present invention relates to a technique for suppressing inrush current when power is turned on in a power source system capable of charging a mounted power storage device from an external power source.

### BACKGROUND ART

As this type of power source system, for example, Japanese Patent Laying-Open No. 2010-124536 (PTD 1) discloses a power source system for a vehicle, the power source system including: a plurality of power storage devices; and a charging device for charging the plurality of power storage devices using a power source (hereinafter, also referred to as "external power source") external to the vehicle. In PTD 1, each of the plurality of power storage devices is a chargeable/dischargeable power storage device and they are connected to a positive electrode line and a negative electrode line in parallel with one another. A connection unit is provided between each of the plurality of power storage devices and the positive electrode line and the negative electrode line. Each of the connection units is controlled to switch between a conductive state and a non-conductive state in accordance with a signal provided from a control device, thereby electrically connecting each of the power storage units to the positive electrode line and the negative electrode line and disconnecting each of the power storage units from the positive electrode line and the negative electrode line.

### CITATION LIST

### PATENT DOCUMENT

PTD 1: Japanese Patent Laying-Open No. 2010-124536
PTD 2: Japanese Patent Laying-Open No. 2001-45673

### SUMMARY OF INVENTION

### TECHNICAL PROBLEM

In PTD 1 described above, each connection unit is configured to include: a system main relay SRB connected between a positive electrode of a corresponding power storage device and the positive electrode line; a system main relay SRG connected between a negative electrode of the power storage device and the negative electrode line; and a system main relay SRP and a limiting resistor connected in series between the negative electrode of the power storage device and the negative electrode line and provided in parallel with system main relay SRG. When connecting the power storage device to a corresponding converter, system main relay SRB at the positive electrode side of the power storage device is turned on and system main relay SRG at the negative electrode side of the power storage device is turned on. In this way, an inrush current to the converter (representatively, precharging current for a capacitor) is limited by the limiting resistor.

In the power source system disclosed in PTD 1, the precharging current for the capacitor can be limited by means of the connection process for the corresponding connection unit when connecting the power storage device to the corresponding converter, but the limiting resistor needs to be provided for each of the plurality of connection units. This results in a large and complicated circuit configuration of the power source system.

Accordingly, the present invention has been made to solve such a problem, and has an object to provide: a power source system capable of suppressing inrush current by a simple circuit configuration when power is turned on; a vehicle including such a power source system; and a method for controlling the power source system.

### SOLUTION TO PROBLEM

According to a certain aspect of the present invention, a power source system includes: first and second power storage devices each configured to be chargeable/dischargeable; a first pair of power lines to which the first and second power storage units are connected in parallel with each other; a second pair of power lines to which the first and second power storage units are connected in parallel with each other; a first opening/closing device inserted in a path connecting the first power storage unit and the first pair of power lines to each other; a second opening/closing device inserted in a path connecting the second power storage unit and the first pair of power lines to each other; a third opening/closing device inserted in a path connecting the first power storage unit and the second pair of power lines to each other; a fourth opening/closing device inserted in a path connecting the second power storage unit and the second pair of power lines to each other; a capacitor connected between the first pair of power lines; and a control device configured to be capable of selectively performing a first charging operation and a second charging operation, the first charging operation being to charge the capacitor using electric power from the first power storage unit, the second charging operation being to charge the capacitor using electric power from the second power storage unit. The first opening/closing device includes a first relay and a resistor connected in series between the first power storage unit and the first pair of power lines. During the first charging operation, the control device causes the second to fourth opening/closing devices to be opened, and controls opening/closing of the first opening/closing device so as to form an electric conduction path extending between the first power storage unit and the capacitor via the resistor. During the second charging operation, the control device controls opening/closing of the first to fourth opening/closing devices so as to form the electric conduction path extending between the second power storage unit and the capacitor via the resistor and the second pair of power lines.

Preferably, the first opening/closing device includes a second relay and a third relay, the second relay being connected between one electrode of the first power storage unit and one power line of the first pair of power lines, the third relay being connected between the other electrode of the first power storage unit and the other power line of the first pair of power lines. The first relay and the resistor are connected to the third relay in parallel. The second opening/closing device includes a fourth relay and a fifth relay, the fourth relay being connected between one electrode of the second power storage unit and the one power line of the first pair of power lines, the fifth relay being connected between the other electrode of the second power storage unit and the other power line of the first pair of power lines. The third opening/closing device includes a sixth relay and a seventh relay, the sixth relay being connected between the one electrode of the first power storage unit and one power line of the second pair of power lines, the seventh relay being connected between the other electrode of the first power storage unit and the other power line of the second pair of power lines. The fourth opening/closing device includes an eighth relay and a ninth relay, the eighth relay being connected between the one electrode of the second power storage unit and the one power line of the second pair of power lines, the ninth relay being connected between the other electrode of the second power storage unit and the other power line of the second pair of power lines. During the second charging operation, the control device controls opening/closing of the first to fourth opening/closing devices so as to turn on the first, fourth, eighth, and eighth relays, and turn off the second, third, fifth, sixth, and eighth relays.

Preferably, the first opening/closing device includes a second relay and a third relay, the second relay being connected between one electrode of the first power storage unit and one power line of the first pair of power lines, the third relay being connected between the other electrode of the first power storage unit and the other power line of the first pair of power lines. The first relay and the resistor are connected to the third relay in parallel. The second opening/closing device includes a fourth relay and a fifth relay, the fourth relay being connected between one electrode of the second power storage unit and the one power line of the first pair of power lines, the fifth relay being connected between the other electrode of the second power storage unit and the other power line of the first pair of power lines. The third opening/closing device includes a sixth relay and a seventh relay, the sixth relay being connected between the one electrode of the first power storage unit and one power line of the second pair of power lines, the seventh relay being connected between the other electrode of the first power storage unit and the other power line of the second pair of power lines. The fourth opening/closing device includes an eighth relay and an ninth relay, the eighth relay being connected between the one electrode of the second power storage unit and the one power line of the second pair of power lines, the ninth relay being connected between the other electrode of the second power storage unit and the other power line of the second pair of power lines. During the second charging operation, the control device controls opening/closing of the first to fourth opening/closing devices so as to turn on the first, second, and sixth to ninth relays, and turn off the third to fifth relays.

Preferably, the first opening/closing device includes a second relay and a third relay, the second relay being connected between one electrode of the first power storage unit and one power line of the first pair of power lines, the third relay being connected between the other electrode of the first power storage unit and the other power line of the first pair of power lines. The first relay and the resistor are connected to the third relay in parallel. The second opening/closing device includes a fourth relay and a fifth relay, the fourth relay being connected between one electrode of the second power storage unit and the one power line of the first pair of power lines, the fifth relay being connected between the other electrode of the second power storage unit and the other power line of the first pair of power lines. The third opening/closing device includes a sixth relay and a seventh relay, the sixth relay being connected between the one electrode of the first power storage unit and one power line of the second pair of power lines, the seventh relay being connected between the other electrode of the first power storage unit and the other power line of the second pair of power lines. The fourth opening/closing device includes an eighth relay and a ninth relay, the eighth relay being connected between the one electrode of the second power storage unit and the sixth relay, the ninth relay being connected between the other electrode of the second power storage unit and the seventh relay. During the second charging operation, the control device controls opening/closing of the first to fourth opening/closing devices so as to turn on the first, fourth, and ninth relays, and turn off the second, third, and sixth to eighth relays.

Preferably, the first pair of power lines are disposed between each of the first and second power storage units and a load. The second pair of power lines are disposed between each of the first and second power storage units and a charging device for supplying the first and second power storage units with electric power from an external power source.

According to another aspect of the present invention, a vehicle includes: a power source system; and a motor that receives electric power supplied from the power source system and generates vehicle driving power. The power source system includes: first and second power storage units each configured to be chargeable/dischargeable; a first pair of power lines to which the first and second power storage units are connected in parallel with each other; a second pair of power lines to which the first and second power storage units are connected in parallel with each other; a first opening/closing device inserted in a path connecting the first power storage unit and the first pair of power lines to each other; a second opening/closing device inserted in a path connecting the second power storage unit and the first pair of power lines to each other; a third opening/closing device inserted in a path connecting the first power storage unit and the second pair of power lines to each other; a fourth opening/closing device inserted in a path connecting the second power storage unit and the second pair of power lines to each other; a capacitor connected between the first pair of power lines; and a control device configured to be capable of selectively performing a first charging operation and a second charging operation, the first charging operation being to charge the capacitor using electric power from the first power storage unit, the second charging operation being to charge the capacitor using electric power from the second power storage unit. The first opening/closing device includes a first relay and a resistor connected in series between the first power storage unit and the first pair of power lines. During the first charging operation, the control device causes the second to fourth opening/closing devices to be opened, and controls opening/closing of the first opening/closing device so as to form an electric conduction path extending between the first power storage unit and the capacitor via the resistor. During the second charging operation, the control device controls opening/closing of the first to fourth opening/closing devices so as to form an electric conduction path extending between the second power storage unit and the capacitor via the resistor and the second pair of power lines.

According to still another aspect of the present invention, there is provided a method for controlling a power source system. The power source system includes: first and second power storage units each configured to be chargeable/dischargeable; a first pair of power lines to which the first and second power storage units are connected in parallel with each other; a second pair of power lines to which the first and second power storage units are connected in parallel with each other; a first opening/closing device inserted in a path connecting the first power storage unit and the first pair of power lines to each other; a second opening/closing device inserted in a path connecting the second power storage unit and the first pair of power lines to each other; a third opening/closing device inserted in a path connecting the first power storage unit and the second pair of power lines to each other; a fourth opening/closing device inserted in a path connecting the second power storage unit and the second pair of power lines to each other; and a capacitor connected between the first pair of power lines. The power source system is configured to be capable of selectively performing a first charging operation and a second charging operation, the first charging operation being to charge the capacitor using electric power from the first power storage unit, the second charging operation being to charge the capacitor using electric power from the second power storage unit. The method includes the steps of: during the first charging operation, causing the second to fourth opening/closing devices to be opened, and controlling opening/closing of the first opening/closing device so as to form an electric conduction path extending between the first power storage unit and the capacitor via a resistor; and during the second charging operation, controlling opening/closing of the first to fourth opening/closing devices so as to form an electric conduction path extending between the second power storage unit and the capacitor via the resistor and the second pair of power lines.

### ADVANTAGEOUS EFFECTS OF INVENTION

According to the present invention, the resistor is used commonly among the plurality of power storage units of the vehicle as a current limiting element for the capacitor, with the result that a precharging resistor does not need to be provided for an opening/closing device of each of the power storage units. As a result, with such a simple configuration, inrush current can be suppressed when starting supply of electric power from one of the plurality of power storage units to the power source system.

### BRIEF DESCRIPTION OF DRAWINGS

Fig. 1 is an entire block diagram of a vehicle including a power source system according to an embodiment of the present invention.
Fig. 2 illustrates detailed configurations of SMRs and CHRs included in the power source system of Fig. 1.
Fig. 3 illustrates a process regarding precharging of a capacitor by a control device in a first embodiment of the present invention.
Fig. 4 is a flowchart for illustrating the process regarding precharging of the capacitor by the control device in the first embodiment of the present invention.
Fig. 5 illustrates a process regarding precharging of the capacitor by the control device in a modification of the first embodiment of the present invention.
Fig. 6 is a flowchart for illustrating the process regarding precharging of the capacitor by the control device in the modification of the first embodiment of the present invention.
Fig. 7 illustrates detailed configurations of SMRs and CHRs included in a power source system according to a second embodiment of the present invention.
Fig. 8 illustrates a process regarding precharging of the capacitor by the control device in the second embodiment of the present invention.
Fig. 9 is a flowchart for illustrating a process regarding precharging of the capacitor by the control device in the second embodiment of the present invention.

### DESCRIPTION OF EMBODIMENTS

The following describes embodiments of the present invention in detail with reference to figures. It should be noted that the same reference characters in the figures indicate the same or corresponding portions.

### [Basic Configuration of Vehicle]

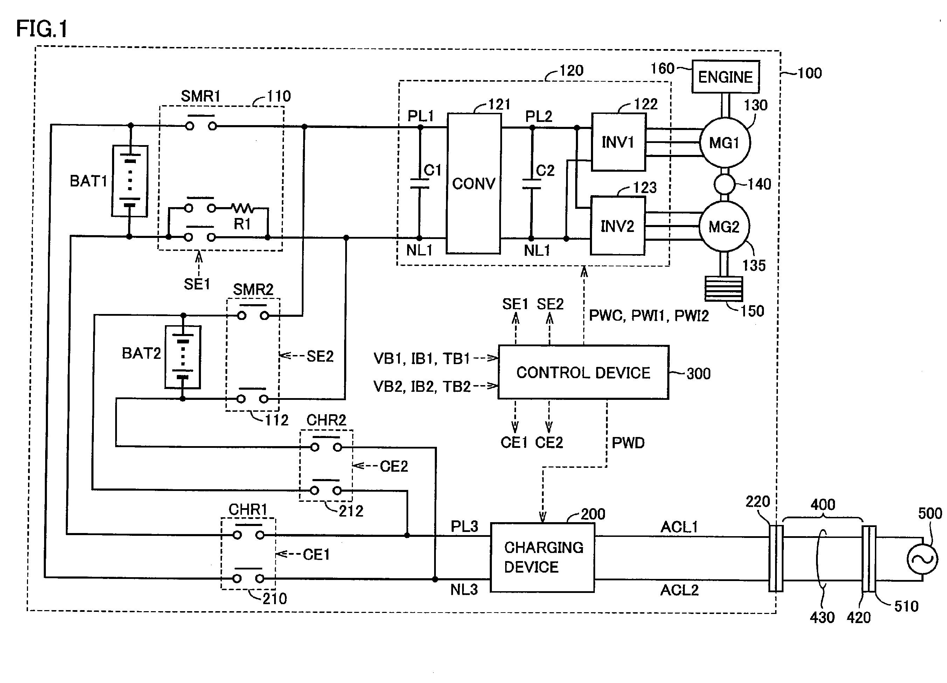

Fig. 1 is an entire block diagram of a vehicle 100 including a power source system according to an embodiment of the present invention.

Referring to Fig. 1, vehicle 100 is representatively a hybrid vehicle, includes an internal combustion engine (engine) 160 and motors (MG: Motor Generators), and travels by controlling respective driving powers therefrom to be in an optimum ratio. Further, vehicle 100 includes a plurality of (for example, two) power storage units for supplying electric power to the motor generators. These power storage units can be charged when receiving motive power resulting from operation of the engine in a system activation state (hereinafter, also referred to as "IG ON state") of vehicle 100, and can be charged when being electrically connected to an external power source 500 via a connection unit 220 during system halt (hereinafter, also referred to as "IG OFF state") of vehicle 100. In the description below, in order to distinguish the respective charging operations from each other, charging the power storage unit using external power source 500 is also referred to as "external charging", and charging the power storage unit by means of operation of engine 160 is also referred to as "internal charging".

Vehicle 100 includes power storage units BAT1, BAT2, system main relays (hereinafter, also referred to as "SMRs") 110, 112, a PCU (Power Control Unit) 120 serving as a driving device, motor generators 130, 135, power transmission gears 140, driving wheels 150, engine 160, and a control device 300.

Each of first power storage unit BAT1 and second power storage unit BAT2 is a chargeable/dischargeable power storage component, and is constructed of, representatively, a secondary battery such as a lithium ion battery or a nickel hydride battery, or a power storage element such as an electric double layer capacitor.

Via first SMR (SMR1) 110, first power storage unit BAT1 is connected to PCU 120 for driving motor generators 130, 135. Moreover, first power storage unit BAT1 supplies PCU 120 with electric power for generating driving power for vehicle 100. Further, first power storage unit BAT1 stores electric power generated by motor generators 130, 135.

Relays included in first SMR 110 respectively have ends connected to the positive electrode terminal and negative electrode terminal of first power storage unit BAT1. The relays included in first SMR 110 respectively have the other ends connected to a positive bus PL1 and a negative bus NL1 both connected to PCU 120. In accordance with a control signal SE1 sent from control device 300, first SMR 110 is controlled to switch between a conductive state (ON) and a non-conductive state (OFF), thereby switching between supply and interruption of electric power between first power storage unit BAT1 and PCU 120. First SMR 110 is employed as a representative example of a "first opening/closing device" capable of disconnecting electric connection between first power storage unit BAT1 and PCU 120. Any type of opening/closing device can be employed instead of first SMR 110.

Second power storage unit BAT2 is connected to PCU 120 via second SMR (SMR2) 112. Moreover, second power storage unit BAT2 supplies PCU 120 with electric power for generating driving power for vehicle 100. Further, second power storage unit BAT1 stores electric power generated by motor generators 130, 135.

Relays included in second SMR 112 respectively have ends connected to the positive electrode terminal and negative electrode terminal of second power storage unit BAT2. The relays included in first SMR 110 respectively have the other ends connected to positive bus PL1 and negative bus NL1 both connected to PCU 120. In accordance with a control signal SE2 sent from control device 300, second SMR 112 is controlled to be switched on/off, thereby switching between supply and interruption of electric power between second power storage unit BAT2 and PCU 120. Second SMR 112 is employed as a representative example of a "second opening/closing device" capable of disconnecting electric connection between second power storage unit BAT2 and PCU 120. Any type of opening/closing device can be employed instead of second SMR 112.

It should be noted that first SMR 110 and second SMR 112 are different from each other in terms of the number of relays included therein. As described below in detail, second SMR 112 is different from first SMR 110 in that second SMR 112 does not include a relay and a resistor connected in series between the negative electrode terminal of power storage unit BAT2 and negative bus NL2.

PCU 120 is configured to bidirectionally convert electric power between each of motor generators 130, 135 and each of power storage units BAT1, BAT2. PCU 120 includes a converter (CONV) 121, and a first inverter (INV1) 122 and a second inverter (INV2) 123 respectively associated with motor generators 130 and 135.

Converter 121 is configured to bidirectionally convert DC voltage between each of power storage units BAT1, BAT2 and a positive bus PL2, which transfers a DC link voltage of inverters 122, 123. Namely, the input/output voltage of each of power storage units BAT1, BAT2 and the DC voltage between positive bus PL2 and negative bus NL1 are bidirectionally stepped up or down. Negative bus NL1 extends to inverters 122, 123 through converter 121. The operation of stepping up or down in converter 121 is controlled in accordance with a switching command PWC from control device 300.

A capacitor C1 is connected between positive bus PL1 and negative bus NL1, and reduces voltage fluctuation between positive bus PL1 and negative bus NL1. A capacitor C2 is connected between positive bus PL2 and negative bus NL1, and reduces voltage fluctuation between positive bus PL2 and negative bus NL1.

Each of first inverter 122 and second inverter 123 bidirectionally converts electric power between the DC power of positive bus PL2 and negative bus NL1 and the AC power supplied to/from motor generators 130 and 135. Mainly, in accordance with a switching command PWI1 from control device 300, first inverter 122 converts AC power generated by motor generator 130 using output of engine 160 into DC power, and supplies it to positive bus PL2 and negative bus NL1. Accordingly, during vehicle traveling, power storage units BAT1, BAT2 can be actively charged using the output of engine 160.

Further, when starting engine 160, in accordance with switching command PMI1 from control device 300, first inverter 122 converts DC power supplied from each of power storage units BAT1, BAT2 into AC power, and supplies it to motor generator 130. In this way, engine 160 can be started using motor generator 130 as a starter.

In accordance with a switching command PWI2 from control device 300, second inverter 123 converts DC power supplied via positive bus PL2 and negative bus NL1 into AC power, and supplies it to motor generator 135. In this way, motor generator 135 generates driving power for vehicle 100.

Meanwhile, during regenerative braking of vehicle 100, motor generator 135 generates AC power as the speed of driving wheels 150 is reduced. In doing so, in accordance with switching command PWI2 from ECU 300, second inverter 123 converts the AC power generated by motor generator 135 into DC power, and supplies it to positive bus PL2 and negative bus NL1. Accordingly, while reducing speed or traveling down a sloping road, power storage units BAT1, BAT2 are charged.

Control device 300 is representatively constructed of an electronic control unit (ECU). The ECU is mainly constructed of a CPU (Central Processing Unit); a memory region such as a RAM (Random Access Memory) or a ROM (Read Only Memory); and an input/output interface. In control device 300, the CPU reads out, to the RAM, a program stored in advance in the ROM and executes it, thereby performing control associated with the vehicle traveling and the charging/discharging. It should be noted that at least a part of the ECU may be configured to perform predetermined mathematical/logical calculation using hardware such as an electronic circuit.

As information sent to control device 300, Fig. 1 illustrates battery data sent from a monitoring unit not shown in the figure. The battery data includes: battery voltage VB1, battery current IB1, and battery temperature TB1 of first power storage unit BAT1; and battery voltage VB2, battery current IB2, and battery temperature TB2 of second power storage unit BAT2. Although not shown in the figure, control device 300 also receives: a DC voltage detection value detected by a voltage sensor (not shown) disposed between the lines of positive bus PL1 and negative bus NL1; a current detection value of each phase of motor generators 130, 135; and a rotation angle detection value of each of motor generators 130, 135.

Further, control device 300 receives a signal IG from an ignition key (not shown). Signal IG is set at H (logic high) level during ON period of the ignition key, whereas signal IG is set at L (logic low) level during OFF period of the ignition key. When signal IG rises to the H level by operating the ignition key from OFF to ON, control device 300 controls on/off of the relays included in SMRs 110, 112 and CHRs 210, 212 in accordance with a method described below.

Each of motor generators 130, 135 is an AC rotating electrical machine, such as a permanent-magnet type synchronous motor including a rotor having a permanent magnet embedded therein. Output torque from each of motor generators 130, 135 is transmitted to driving wheels 150 and engine 160 via power transmission gears 140 including a speed reducer and a power split device, whereby vehicle 100 travels. Each of motor generators 130, 135 is capable of generating electric power using rotational force from driving wheels 150 during regenerative braking of vehicle 100. The electric power thus generated is converted by PCU 120 into charging power for power storage units BAT1, BAT2. In the present embodiment, it is assumed that motor generator 130 is exclusively operated as a generator driven by engine 160 to generate electric power, whereas motor generator 135 is exclusively operated as a motor for driving driving wheels 150 for the purpose of traveling of vehicle 100.

It should be noted that the present embodiment illustrates an exemplary configuration in which two pairs of motor generators and inverters are provided, but one pair of a motor generator and an inverter or more than two pairs of motor generators and inverters may be provided.

Further, in the present embodiment, vehicle 100 is illustrated as a hybrid vehicle, but the configuration of vehicle 100 is not limited as long as vehicle 100 is a vehicle including a motor for generating vehicle driving power using electric power from power storage units BAT1, BAT2. In other words, examples of vehicle 100 includes an electric vehicle or a fuel cell vehicle each having no engine, in addition to the hybrid vehicle having the engine and the motors to generate vehicle driving power as shown in Fig. 1.

The power source system of the vehicle is formed of a portion of the illustrated configuration of vehicle 100 other than motor generators 130, 135, power transmission gears 140, engine 160, and driving wheels 150.

The power source system according to the present embodiment has a function of charging each of power storage units BAT1, BAT2 using electric power supplied from external power source 500. In other words, the power source system is configured to permit charging (external charging) of power storage units BAT1, BAT2 from external power source 500.

Specifically, as a configuration for performing the external charging of power storage units BAT1, BAT2, the power source system further includes a charging device 200, charging relays (hereinafter, also referred to as "CHRs") 210, 212, and connection unit 220.

Connection unit 220 is provided in the body of vehicle 100. In the case where vehicle 100 receives electric power from external power source 500, a charging connector 410 of a charging cable 400 is connected to connection unit 220. When a plug 420 of charging cable 400 is connected to a receptacle 510 of external power source 500, electric power from external power source 500 is supplied to vehicle 100 via an electric wire portion 430 of charging cable 400.

Charging device 200 is connected to connection unit 220 via power lines ACL1, ACL2. Further, charging device 200 is connected to first power storage unit BAT1 via first CHR (CHR1) 210. Further, charging device 200 is connected to second power storage unit BAT2 via second CHR (CHR2) 212. Further, during the external charging, in accordance with a control signal PWD from control device 300, charging device 200 converts AC power supplied from external power source 500 into DC power and supplies it to power storage units BAT1, BAT2. It should be noted that charging device 200 includes an AC/DC converter (not shown) for performing electric power conversion between AC power and DC power.

Relays included in first CHR 210 respectively have ends connected to the positive electrode terminal and negative electrode terminal of first power storage unit BAT1. The relays included in first CHR 210 respectively have the other ends connected to positive bus PL3 and negative bus NL3 both connected to charging device 200. In accordance with a control signal CE1 sent from control device 300, first CHR 210 is controlled to switch between the conductive state (ON) and the non-conductive state (OFF), thereby switching between supply and interruption of electric power between first power storage unit BAT1 and charging device 200. First CHR 210 is employed as a representative example of a "third opening/closing device" capable of disconnecting electric connection between first power storage unit BAT1 and charging device 200. Any type of opening/closing device can be employed instead of first CHR 210.

Relays included in second CHR 212 respectively have ends connected to the positive electrode terminal and negative electrode terminal of second power storage unit BAT2. The relays included in second CHR 212 respectively have the other ends connected to positive bus PL3 and negative bus NL3 both connected to charging device 200. Then, second CHR 212 is controlled to be switched on/off in accordance with a control signal CE2 from control device 300, thereby switching between supply and interruption of electric power between second power storage unit BAT2 and charging device 200. Second CHR 212 is employed as a representative example of a "fourth opening/closing device" capable of disconnecting electric connection between second power storage unit BAT2 and charging device 200. Any type of opening/closing device can be employed instead of second CHR 212.

### [First Embodiment]

In a power source system according to an embodiment of the present invention, power storage units BAT1 and BAT2 are connected to positive bus PL1 and negative bus NL1 in parallel with each other. Accordingly, converter 121 ofPCU 120 is supplied with electric power from power storage units BAT1 and BAT2. Converter 121 performs voltage conversion between each of positive bus PL1 and negative bus NL1 and each of positive bus PL2 and negative bus NL1, based on a control signal PWC from control device 300.

Meanwhile, when there is a malfunction (for example, breaking of wire, burned-out fuse, or the like) in one of power storage units BAT1, BAT2, the one of the power storage units cannot be used, with the result that electric power cannot be supplied from the power storage unit. When there is a malfunction in one of the power storage units, the power source system can disconnect the charging/discharging path of the one of the power storage units, and can perform retreat traveling using electric power stored in the other power storage unit.

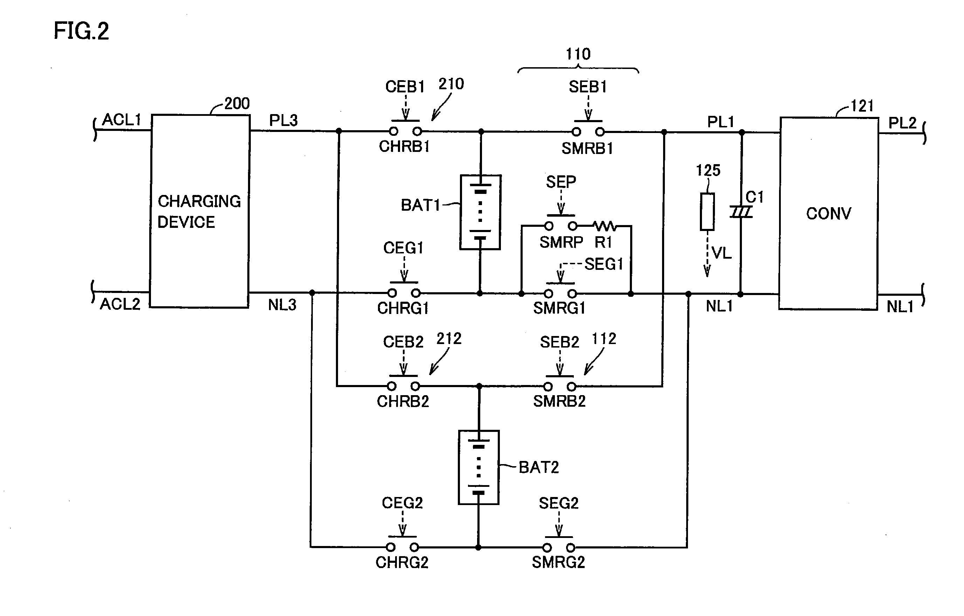

For the retreat traveling, when the ignition key is turned on to request system activation after detecting a malfunction in a power storage unit, control device 300 performs initial charging (precharging) control for capacitor C1 by controlling on/off of the relays included in SMRs 110, 112 and CHRs 210, 212 in accordance with Fig. 2 to Fig. 4 illustrated below.

Fig. 2 illustrates detailed configurations of the SMRs and CHRs included in the power source system of Fig. 1.

Referring to Fig. 2, first SMR 110 includes relays SMRB1, SMRP, SMRG1, and a resistor R1. Relay SMRB 1 is connected between the positive electrode terminal of first power storage unit BAT1 and positive bus PL1. Relay SMRG1 is connected between the negative electrode terminal of first power storage unit BAT1 and negative bus NL1. Relay SMRP and resistor R1, which are connected in series, are connected to relay SMRG1 in parallel. Relay SMRB1 is turned on/off based on a control signal SEB1 sent from control device 300 (Fig. 1). Relay SMRG1 is turned on/off based on a control signal SEG1 sent from control device 300. Relay SMRP is turned on/off based on a control signal SEP sent from control device 300. As described above, first SMR 110 corresponds to a "first opening/closing device" in the present invention.

Second SMR 112 includes relays SMRB2 and SMRG2. Relay SMRB2 is connected between the positive electrode terminal of second power storage unit BAT2 and positive bus PL1. Relay SMRG2 is connected between the negative electrode terminal of second power storage unit BAT2 and negative bus NL1. Relay SMRB2 is turned on/off based on a control signal SEB1 sent from control device 300. Relay SMRG2 is turned on/off based on a control signal SEG2 sent from control device 300. As described above, second SMR 112 corresponds to a "second opening/closing device" in the present invention.

First CHR 210 includes relays CHRB1 and CHRG1. Relay CHRB1 is connected between the positive electrode terminal of first power storage unit BAT1 and positive bus PL3. Relay CHRG1 is connected between the negative electrode terminal of first power storage unit BAT1 and negative bus NL3. Relay CHRB1 is turned on/off based on a control signal CEB1 sent from control device 300. Relay CHRG1 is turned on/off based on a control signal CEG1 sent from control device 300. As described above, first CHR 210 corresponds to a "third opening/closing device" in the present invention.

Second CHR 212 includes relays CHRB2 and CHRG2. Relay CHRB2 is connected between the positive electrode terminal of second power storage unit BAT2 and positive bus PL3. Relay CHRG2 is connected between the negative electrode terminal of second power storage unit BAT2 and negative bus NL3. Relay CHRB2 is turned on/off based on a control signal CEB2 sent from control device 300. Relay CHRG2 is turned on/off based on a control signal CEG2 sent from control device 300. As described above, second CHR 212 corresponds to a "fourth opening/closing device" in the present invention.

A voltage sensor 125 is disposed between positive bus PL1 and negative bus NL1. Voltage sensor 125 detects a voltage across capacitor C1, i.e., DC voltage VL, and sends a detection value thereof to control device 300.

In the configuration shown in Fig. 1 and Fig. 2, during the OFF period of the ignition key (during the period of the L level of signal IG), control device 300 turns off the relays included in SMRs 110, 112. In other words, supply of electric power from power storage units BAT1, BAT2 to positive bus PL1 and negative bus NL1 is interrupted. Further, control device 300 turns off the relays included in CHRs 210, 212. In other words, charging device 200 is disconnected from the power source system.

In response to signal IG rising from the L level to the H level by operating the ignition key from OFF to ON, the power source system is powered on, with the result that electric power starts to be supplied to positive bus PL1 and negative bus NL1 from a power storage unit, diagnosed as being normal, of power storage units BAT1 and BAT2. It should be noted that supply of electric power to positive bus PL1 and negative bus NL1 from a power storage unit diagnosed as having a malfunction remains interrupted.

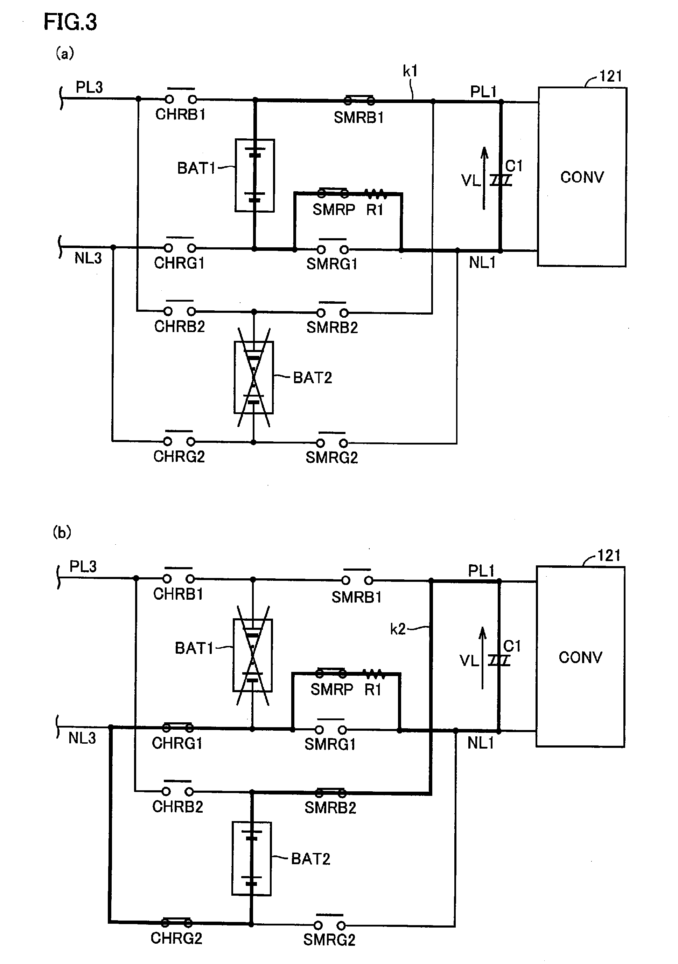

Specifically, when signal IG rises from the L level to the H level, control device 300 controls on/off of SMRs 110, 112 and CHRs 210, 212 so as to precharge capacitor C1. Fig. 3 illustrates a process regarding precharging of capacitor C1 by control device 300. Fig. 3(a) shows a process regarding precharging of capacitor C1 when there is a malfunction in second power storage unit BAT2. Fig. 3(b) shows a process regarding precharging of capacitor C1 when there is a malfunction in first power storage unit BAT1.

Referring to Fig. 3(a), when signal IG rises from the L level to the H level, control device 300 sets control signal SEB1 at the H level so as to turn on relay SMRB1, and sets control signal SEP at the H level so as to turn on relay SMRP. In this way, an electric conduction path k1 is formed between first power storage unit BAT1 and capacitor C1 with resistor R1 being inserted therein. Via this electric conduction path k1, electric power is supplied from first power storage unit BAT1 so as to charge capacitor C1. On this occasion, current flowing in electric conduction path k1 is limited by resistor R1, thereby suppressing inrush current to capacitor C1.

It should be noted that when voltage VL of capacitor C1 reaches a voltage set in advance, control device 300 determines that a charging completion condition for capacitor C1 has been established, and sets control signal SEG1 at the H level so as to turn on relay SMRG1 and sets control signal SEP at the L level so as to turn off relay SMRP.

On the other hand, referring to Fig. 3(b), when signal IG rises from the L level to the H level in the case where there is a malfunction in first power storage unit BAT1, control device 300 sets control signal SEB2 at the H level so as to turn on relay SMRB2, and sets control signal SEP at the H level so as to turn on relay SMRP. Further, control device 300 sets control signal CEG1 at the H level so as to turn on relay CHRG1, and sets control signal CEG2 at the H level so as to turn on relay CHRG2. In this way, an electric conduction path k2 is formed between second power storage unit BAT2 and capacitor C1 with resistor R1 being inserted therein. Via this electric conduction path k2, electric power is supplied from second power storage unit BAT2 so as to charge capacitor C 1. On this occasion, current flowing in electric conduction path k2 is limited by resistor R1, thereby suppressing inrush current to capacitor C1.

Further, resistor R1 included in the first opening/closing device (first SMR 110) corresponding to first power storage unit BAT1 serves as a precharging resistor (limiting resistor) and is commonly used by first power storage unit BAT1 and second power storage unit BAT2. Accordingly, no precharging resistor needs to be newly provided for the second opening/closing device (second SMR 112). As a result, the configuration of the power source system can be simplified.

It should be noted that when voltage VL of capacitor C1 reaches a voltage set in advance, control device 300 determines that a charging completion condition for capacitor C1 has been established, and sets control signal SEG2 at the H level so as to turn on relay SMRG2 and sets control signals SEP, CEG1, CEG2 at the L level so as to turn off relays SMRP, CHRG1, CHRG2.

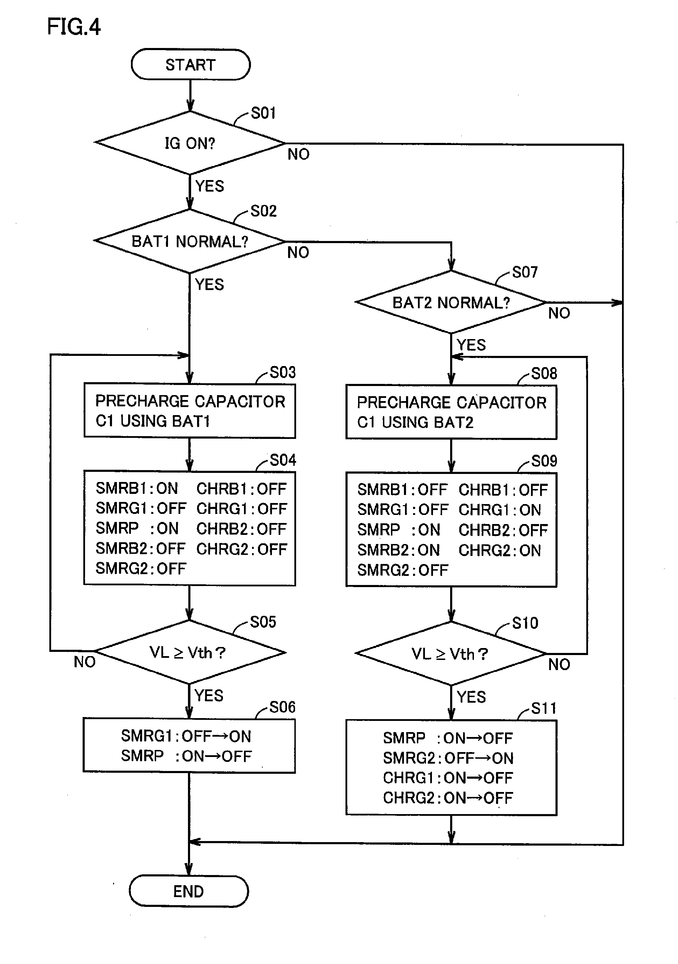

Fig. 4 is a flowchart for illustrating the process regarding precharging of capacitor C1 by control device 300. It should be noted that the process of this flowchart is invoked from a predetermined main routine and performed whenever a certain period of time passes or a predetermined condition is established. Further, it is assumed that each of the steps of the flowchart of Fig. 4 is implemented by a software process performed by control device 300 (execution of a stored program by a CPU) or a hardware process (operation of a dedicated electronic circuit).

Referring to Fig. 4, in a step S01, control device 300 determines whether or not the ignition key has been turned on, based on signal IG sent from the ignition key. When control device 300 determines that the ignition key has not been turned on (determined as NO in step S01), control device 300 terminates the process without performing a series of subsequent processes.

On the other hand, when it is determined that the ignition key has been turned on (determined as YES in step S01), control device 300 determines in a step S02 whether or not first power storage unit BAT1 is normal. When it is determined that first power storage unit BAT1 is normal (determined as YES in step S02), control device 300 precharges capacitor C1 in a step S03 using electric power supplied from first power storage unit BAT1.

Specifically, in a step S04, control device 300 controls on/off of the relays included in SMRs 110, 112 and CHRs 210, 212. As illustrated in Fig. 3(a), when control device 300 turns on relays SMRB1 and SMRP, electric conduction path k1 is formed between first power storage unit BAT1 and capacitor C1 with resistor R1 being inserted therein. Via this electric conduction path k1, electric power is supplied from first power storage unit BAT1 so as to charge capacitor C1.

In a step S05, control device 300 determines whether or not DC voltage VL detected by voltage sensor 125 has reached voltage Vth set in advance. When DC voltage VL is less than voltage Vth (determined as NO in step S05), control device 300 keeps on precharging capacitor C1 in accordance with steps S03 and S04.

On the other hand, when DC voltage VL has reached voltage Vth (determined as YES in step S05), control device 300 determines in a step S06 that the charging completion condition for capacitor C1 has been established, and turns on relay SMRG1 and turns off relay SMRP.

As described above, when first power storage unit BAT1 is normal (determined as YES in step S02), capacitor C1 is precharged with electric power supplied from first power storage unit BAT1 via resistor R1. On the other hand, when there is a malfunction in first power storage unit BAT1 (determined as NO in step S02), control device 300 further determines in a step S07 whether or not second power storage unit BAT2 is normal. When there is a malfunction in second power storage unit BAT2 (determined as NO in step S07), i.e., when there are malfunctions in power storage units BAT1 and BAT2, control device 300 determines that the retreat traveling cannot be performed, and ends the control process regarding the retreat traveling without instructing the retreat traveling.

Meanwhile, when it is determined that second power storage unit BAT2 is normal (determined as YES in step S02), control device 300 precharges capacitor C1 in a step S08 with electric power supplied from second power storage unit BAT2.

Specifically, in a step S09, control device 300 controls on/off of the relays included in SMRs 110, 112 and CHRs 210, 212. As illustrated in Fig. 3(b), when control device 300 turns on relays SMRB2, SMRP, CHRG1, and CHRG2, electric conduction path k2 is formed between second power storage unit BAT2 and capacitor C1 with resistor R1 being inserted therein. Via this electric conduction path k2, electric power is supplied from second power storage unit BAT2 so as to charge capacitor C1.

In a step S10, control device 300 determines whether or not DC voltage VL detected by voltage sensor 125 has reached voltage Vth set in advance. When DC voltage VL is less than voltage Vth (determined as NO in step S10), control device 300 keeps on precharging capacitor C1 in accordance with steps S08 and S09.

On the other hand, when DC voltage VL has reached voltage Vth (determined as YES in step S 10), control device 300 determines in a step S 11 that the charging completion condition for capacitor C1 has been established, and turns on relay SMRG2 and turns off relays SMRP, CHRG1, CHRG2.

As described above, according to the first embodiment of the present invention, in the case where the retreat traveling is performed using electric power stored in one of the plurality of power storage units provided in the vehicle, capacitor C1 provided in PCU 120 is charged with DC voltage supplied via precharging relay SMRP and resistor R1 provided commonly for the plurality of power storage units. In this way, even when any of the plurality of power storage units is selected as the power source, the precharging current for capacitor C1 can be limited by precharging resistor R1. With resistor R1 being thus used commonly among the plurality of power storage units as a current limiting element for capacitor C1, a precharging resistor does not need to be provided for an opening/closing device of each of the power storage units. As a result, the configuration of the power source system can be simplified.

### (Modification)

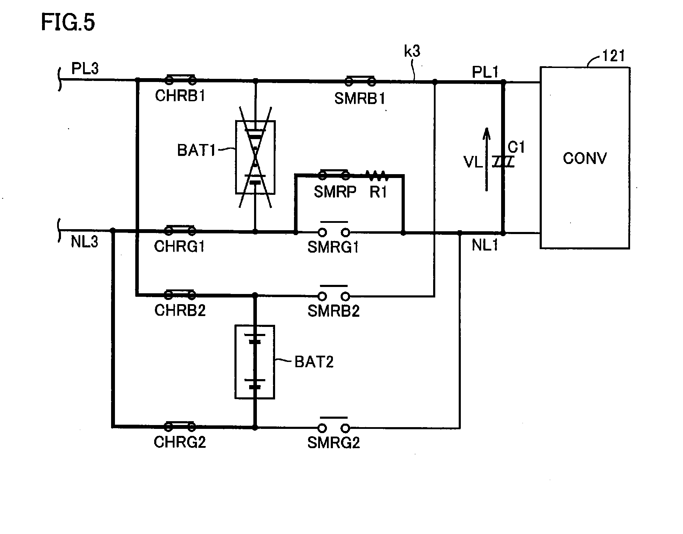

It should be noted that in the case where the retreat traveling is performed using electric power stored in second power storage unit BAT2, an electric conduction path k3 shown in Fig. 5 can be formed between second power storage unit BAT2 and capacitor C1 instead of electric conduction path k2 illustrated in Fig. 3(b).

Referring to Fig. 5, when signal IG rises from the L level to the H level, control device 300 sets control signal SEB1 at the H level so as to turn on relay SMRB1, and sets control signal SEP at the H level so as to turn on relay SMRP. Further, control device 300 sets control signals CEB1 and CEG1 at the H level so as to turn on relays CHRB1 and CHRG1, and sets control signals CEB2 and CEG2 at the H level so as to turn on relays CHRB2 and CHRG2. In this way, electric conduction path k3 is formed between second power storage unit BAT2 and capacitor C1 with resistor R1 being inserted therein. Via this electric conduction path k3, electric power is supplied from second power storage unit BAT2 so as to charge capacitor C1. On this occasion, current flowing in electric conduction path k3 is limited by resistor R1, thereby suppressing inrush current to capacitor C1.

As described above, also in the present modification, resistor R1 included in the first opening/closing device (first SMR 110) corresponding to first power storage unit BAT1 serves as a precharging resistor and is commonly used by first power storage unit BAT1 and second power storage unit BAT2. Accordingly, no precharging resistor needs to be newly provided for the second opening/closing device (second SMR 112). As a result, the configuration of the power source system can be simplified.

It should be noted that when voltage VL of capacitor C1 reaches the voltage set in advance, control device 300 determines that the charging completion condition for capacitor C1 has been established, sets control signals SEB2 and SEG2 at the H level so as to turn on relays SMRB2 and SMRG2, and sets control signals SEB 1, SEP, CEB1, CEG1, CEB2, CEG2 at the L level so as to turn off relays SMRB1, SMRP, CHRB1, CHRG1, CHRB2, CHRG2.

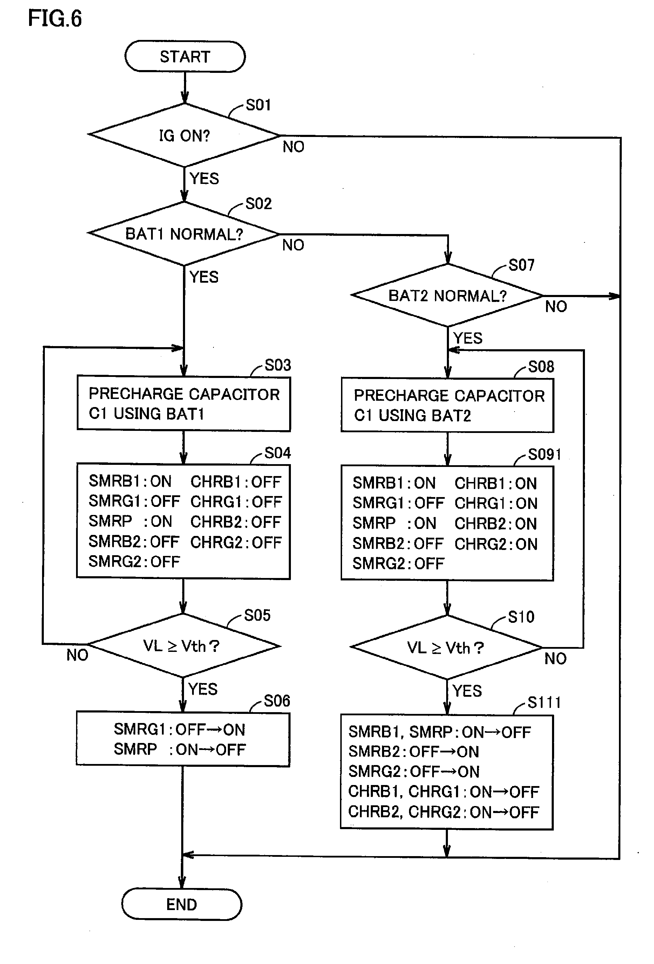

Fig. 6 is a flowchart for illustrating a process regarding precharging of capacitor C1 by control device 300 in the power source system according to the modification of the first embodiment of the present invention. It should be noted that the process of this flowchart is invoked from a predetermined main routine and performed whenever a certain period of time passes or a predetermined condition is established. Further, it is assumed that each of the steps of the flowchart of Fig. 6 is implemented by a software process performed by control device 300 or a hardware process.

In comparison between the flowchart of Fig. 6 and the flowchart of Fig. 4, steps S09 and S11, which represent the on/off control for the relays when precharging capacitor C1 using second power storage unit BAT2, are respectively replaced with steps S091 and S111 in flowchart of Fig. 6. Hence, with regard to Fig. 6, the same steps as those in Fig. 4 are not repeatedly described in detail.

Referring to Fig. 6, when precharging capacitor C1 with electric power supplied from second power storage unit BAT2 (step S08), control device 300 controls on/off of the relays included in SMRs 110, 112 and CHRs 210, 212 in step S091. As illustrated in Fig. 6, when control device 300 turns on relays SMRB1, SMRP, CHRB1, CHRG1, CHRB2, and CHRG2, electric conduction path k3 is formed between second power storage unit BAT2 and capacitor C1 with resistor R1 being inserted therein. Via this electric conduction path k3, electric power is supplied from second power storage unit BAT2 so as to charge capacitor C1.

In step S10, control device 300 determines whether or not DC voltage VL detected by voltage sensor 125 has reached voltage Vth set in advance. When DC voltage VL is less than voltage Vth (determined as NO in step S10), control device 300 keeps on precharging capacitor C1 in accordance with steps S08 and S091.

On the other hand, when DC voltage VL has reached voltage Vth (determined as YES in step S 10), control device 300 determines in a step S111 that the charging completion condition for capacitor C1 has been established, and turns on relays SMRB2 and SMRG2 and turns off relays SMRB1, SMRP, CHRB1, CHRG1, CHRB2, CHRG2.

### [Second Embodiment]

In the first embodiment, it has been illustrated that as the third and fourth opening/closing devices provided between charging device 200 and power storage unit BAT1 and between charging device 200 and power storage unit BAT2, first CHR 210 and second CHR 212 are connected to charging device 200 in parallel with each other. However, the present invention can be applied to opening/closing devices having configurations different from that in Fig. 1 and Fig. 2.

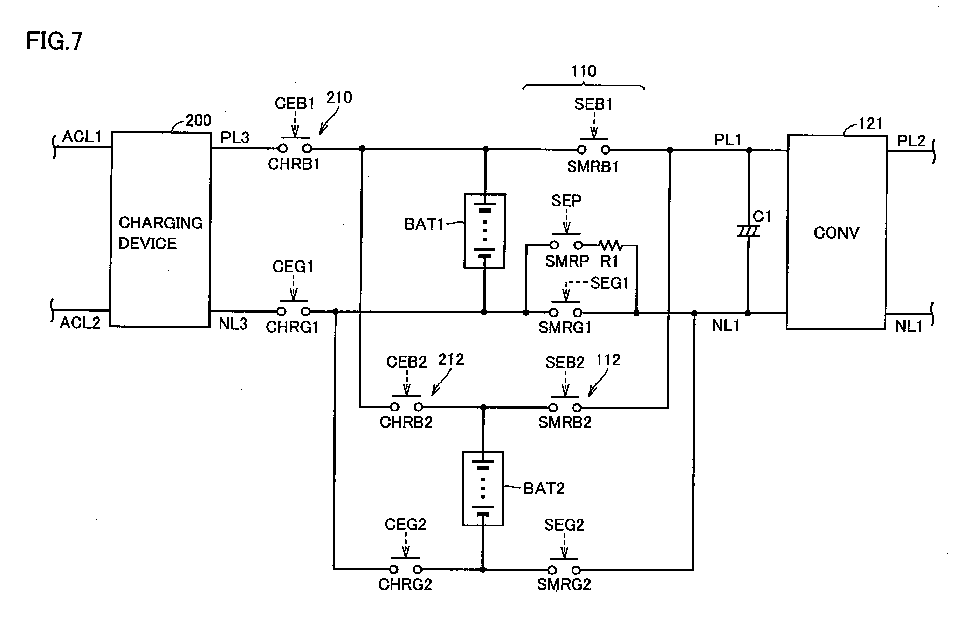

Fig. 7 illustrates detailed configurations of the SMRs and CHRs included in the power source system according to the second embodiment of the present invention. The configurations of the SMRs and CHRs in Fig. 7 are different from the configurations of the SMRs and CHRs in Fig. 2 of the first embodiment in terms of only the configurations of the CHRs. Hence, a detailed description of the SMRs in Fig. 7 will not be repeated.

Referring to Fig. 7, first CHR 210 includes relays CHRB1 and CHRG1. Relay CHRB1 is connected between the positive electrode terminal of first power storage unit BAT1 and positive bus PL3. Relay CHRG1 is connected between the negative electrode terminal of first power storage unit BAT1 and negative bus NL3. Relay CHRB1 is turned on/off based on control signal CEB1 sent from control device 300. Relay CHRG1 is turned on/off based on control signal CEG1 sent from control device 300. As described above, first CHR 210 corresponds to a "third opening/closing device" in the present invention.

Second CHR 212 includes relays CHRB2 and CHRG2. Relay CHRB2 is connected between the positive electrode terminal of second power storage unit BAT2 and relay CHRB 1. Relay CHRG2 is connected between the negative electrode terminal of second power storage unit BAT2 and relay CHRG1. Relay CHRB2 is turned on/off based on control signal CEB2 sent from control device 300. Relay CHRG2 is turned on/off based on control signal CEG2 sent from control device 300. As described above, second CHR 212 corresponds to a "fourth opening/closing device" in the present invention.

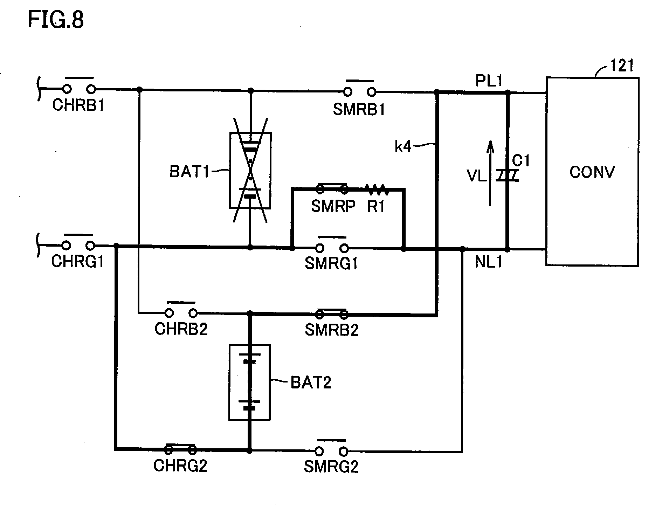

Also in the configuration shown in Fig. 7, in response to signal IG rising from the L level to the H level by operating the ignition key from OFF to ON, the power source system is powered on, with the result that electric power starts to be supplied to positive bus PL1 and negative bus NL1 from a power storage unit, diagnosed as being normal, of power storage units BAT1 and BAT2. When signal IG rises from the L level to the H level, control device 300 controls on/off of SMRs 110, 112 and CHRs 210, 212 so as to precharge capacitor C1. Fig. 8 illustrates a process regarding precharging of capacitor C1 by control device 300 in the second embodiment of the present invention. It should be noted that regarding precharging of capacitor C1 when there is a malfunction in second power storage unit BAT2, the same process as that shown in Fig. 3 (a) of the first embodiment is performed. Hence, Fig. 8 only shows the process regarding precharging of capacitor C1 when there is a malfunction in first power storage unit BAT1.

Referring to Fig. 8, when signal IG rises from the L level to the H level in the case where there is a malfunction in first power storage unit BAT1, control device 300 sets control signal SEB2 at the H level so as to turn on relay SMRB2, and sets control signal SEP at the H level so as to turn on relay SMRP. Further, control device 300 sets control signal CEG2 at the H level so as to turn on relay CHRG2. In this way, an electric conduction path k4 is formed between second power storage unit BAT2 and capacitor C1 with resistor R1 being inserted therein. Via this electric conduction path k4, electric power is supplied from second power storage unit BAT2 so as to charge capacitor C1. On this occasion, current flowing in electric conduction path k4 is limited by resistor R1, thereby suppressing inrush current to capacitor C1.

Also in the second embodiment, resistor R1 included in the first opening/closing device (first SMR 110) corresponding to first power storage unit BAT1 serves as a precharging resistor and is commonly used by first power storage unit BAT1 and second power storage unit BAT2. Accordingly, no precharging resistor needs to be newly provided for the second opening/closing device (second SMR 112). As a result, the configuration of the power source system can be simplified.

It should be noted that when voltage VL of capacitor C1 reaches a voltage set in advance, control device 300 determines that a charging completion condition for capacitor C 1 has been established, and sets control signal SEG2 at the H level so as to turn on relay SMRG2 and sets control signals SEP, CEG2 at the L level so as to turn off relays SMRP, CHRG2.

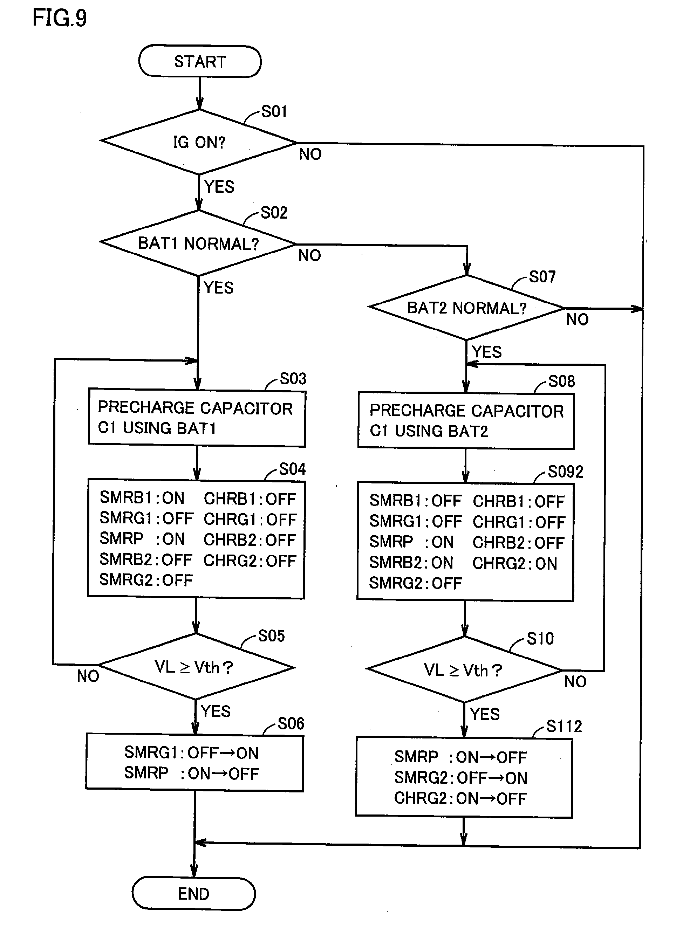

Fig. 9 is a flowchart for illustrating a process regarding precharging of capacitor C1 by control device 300 in the power source system according to the second embodiment of the present invention. It should be noted that the process of this flowchart is invoked from a predetermined main routine and performed whenever a certain period of time passes or a predetermined condition is established. Further, it is assumed that each of the steps of the flowchart of Fig. 9 is implemented by a software process performed by control device 300 or a hardware process.

In comparison between the flowchart of Fig. 9 and the flowchart of Fig. 4 of the first embodiment, steps S09 and S11, which represent the on/off control for the relays when precharging capacitor C1 using second power storage unit BAT2, are respectively replaced with steps S092 and S 112 in flowchart of Fig. 9. Hence, with regard to Fig. 9, the same steps as those in Fig. 4 are not repeatedly described in detail.

Referring to Fig. 9, when precharging capacitor C1 with electric power supplied from second power storage unit BAT2 (step S08), control device 300 controls on/off of the relays included in SMRs 110, 112 and CHRs 210, 212 in step S092. As illustrated in Fig. 8, when control device 300 turns on relays SMRP, SMRB2, CHRG2, electric conduction path k4 is formed between second power storage unit BAT2 and capacitor C1 with resistor R1 being inserted therein. Via this electric conduction path k4, electric power is supplied from second power storage unit BAT2 so as to charge capacitor C1.

In a step S10, control device 300 determines whether or not DC voltage VL detected by voltage sensor 125 has reached voltage Vth set in advance. When DC voltage VL is less than voltage Vth (determined as NO in step S10), control device 300 keeps on precharging capacitor C1 in accordance with steps S08 and S092.

On the other hand, when DC voltage VL has reached voltage Vth (determined as YES in step S10), control device 300 determines in a step S 112 that the charging completion condition for capacitor C 1 has been established, and turns on relay SMRG2 and turns off relays SMRP, CHRG2.

In comparison between electric conduction path k4 shown in Fig. 8 and electric conduction path k2 shown in Fig. 3(b) of the first embodiment, the number of relays inserted in electric conduction path k4 is smaller than the number of relays inserted in electric conduction path k2. Because the number of relays inserted in the electric conduction path is thus reduced, power loss can be reduced when supplying electric power from second power storage unit BAT2 to capacitor C1 in the second embodiment.

As described above, according to the second embodiment of the present invention, as with the first embodiment, in the case where the retreat traveling is performed using electric power stored in one of the plurality of power storage units provided in the vehicle, capacitor C1 provided in PCU 120 is charged with DC voltage supplied via precharging relay SMRP and resistor R1 provided commonly for the plurality of power storage units. In this way, even when any of the plurality of power storage units is selected as the power source, the precharging current for capacitor C1 can be limited by precharging resistor R1. With resistor R1 being thus used commonly by the plurality of power storage units as a current limiting element for capacitor C1, a precharging resistor does not need to be provided for an opening/closing device of each of the power storage units. As a result, the configuration of the power source system can be simplified.

Further, according to the second embodiment of the present invention, the number of relays inserted in the electric conduction path formed between the capacitor and the power storage unit selected as the power source can be reduced, thereby reducing power loss in the electric conduction path during precharging of the capacitor.

In the case where a larger number of power storage units are provided in each of the first and second embodiments, a similar effect can be obtained by adding an SMR and a CHR so as to correspond to a power storage unit newly added, and forming an electric conduction path extending between the power storage unit and capacitor C1 via resistor R1 included in first SMR 110.

Regarding correspondence between the present embodiment and the configuration of the present invention, positive bus PL1 and negative bus NL1 correspond to a "first pair of power lines" in the present invention, capacitor C1 corresponds to a "capacitor" in the present invention, and positive bus PL3 and negative bus NL3 correspond to a "second pair of power lines" in the present invention. Further, first SMR 110 (relays SMRB1, SMRG1, SMRP, R1) corresponds to a "first opening/closing device" in the present invention, and second SMR 112 (relays SMRB2, SMRG2) corresponds to a "second opening/closing device" in the present invention. Further, first CHR 210 (relays CHRB1, CHRG1) corresponds to a "third opening/closing device" in the present invention, and second CHR 212 (relays SHRB2, CHRG2) corresponds to a "fourth opening/closing device" in the present invention. Further, relay SMRP corresponds to a "precharging relay" in the present invention, and resistor R1 corresponds to a "limiting resistor" in the present invention.

In the first and second embodiments, it has been illustrated that precharging relay SMRP and resistor R1 connected in series are connected to relay SMRG1, which is connected to the negative electrode side of first power storage unit BAT1, in parallel. However, the present invention can be applied to a configuration in which they are connected to relay SMRB1, which is connected to the positive electrode side of first power storage unit BAT1, in parallel. Also in this case, the SMRs and CHRs are controlled to be on/off so as to form an electric conduction path extending between second power storage unit BAT2 and capacitor C1 via precharging resistor R1, positive bus PL3, and negative bus NL3.

It should be noted that the load of the power source system is not particularly limited and the configuration in Fig. 1 is just exemplary. Further, for vehicles to which the power source system is applied, there may be employed other configurations, which drive a motor, than electrically powered vehicles such as hybrid vehicles or electric vehicles.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### INDUSTRIAL APPLICABILITY

The present invention can be applied to a power source system of an electrically powered vehicle capable of charging a plurality of power storage units of the vehicle using an external power source.

### REFERENCE SIGNS LIST

100: vehicle; 110, 112: SMR; 121: converter; 122, 123: inverter; 125: voltage sensor; 130, 135: motor generator; 140: power transmission gear; 150: driving wheel; 160: engine; 200: charging device; 210, 212: CHR; 220: connection unit; 300: control device; 400: charging cable; 410: charging connector; 420: plug; 430: electric wire portion; 500: external power source; 510: receptacle; ACL1, ACL2: power line; BAT1, BAT2: power storage unit; C1, C2: capacitor; NL1, NL2, NL3: negative bus; PL 1, PL2, PL3: positive bus; R1: resistor.

## Claims

1. A power source system comprising:
first and second power storage units (BAT1, BAT2) each configured to be chargeable/dischargeable;
a first pair of power lines (PL1, NL1) to which said first and second power storage units (BAT1, BAT2) are connected in parallel with each other;
a second pair of power lines (PL3, NL3) to which said first and second power storage units (BAT1, BAT2) are connected in parallel with each other;
a first opening/closing device (SMRB1, SMRG1, SMRP, R1) inserted in a path connecting said first power storage unit (BAT1) and said first pair of power lines (PL1, NL1) to each other;
a second opening/closing device (SMRB2, SMRG2) inserted in a path connecting said second power storage unit (BAT2) and said first pair of power lines (PL1, NL1) to each other;
a third opening/closing device (CHRB1, CHRG 1) inserted in a path connecting said first power storage unit (BAT1) and said second pair of power lines (PL3, NL3) to each other;
a fourth opening/closing device (CHRB2, CHRG2) inserted in a path connecting said second power storage unit (BAT2) and said second pair of power lines (PL3, NL3) to each other;
a capacitor (C1) connected between said first pair of power lines (PL1, NL1); and
a control device (300) for controlling opening/closing of said first to fourth opening/closing devices (SMRB1, SMRG1, SMRP, R1, SMRB2, SMRG2, CHRB1, CHRG1, CHRB2, CHRG2),
said first opening/closing device (SMRB1, SMRG1, SMRP, R1) being configured to include a precharging relay (SMRP) and a limiting resistor (R1) connected in series between said first power storage unit (BAT1) and said first pair of power lines (PL1, NL1), said second opening/closing device (SMRB2, SMRG2) being configured not to include said precharging relay (SMRP) and said limiting resistor (R1) between said second power storage unit (BAT2) and said first pair of power lines (PL1, NL1),
when charging said capacitor (C1) using electric power from said second power storage unit (BAT2), said control device (300) controls opening/closing of said first to fourth opening/closing devices (SMRB1, SMRG1, SMRP, R1, SMRB2, SMRG2, CHRB1, CHRG1, CHRB2, CHRG2) so as to form an electric conduction path extending between said second power storage unit (BAT2) and said capacitor (C1) via said precharging relay (SMRP) and said limiting resistor (R1).

2. The power source system according to claim 1, wherein
said control device (300) is configured to be capable of selectively performing a first charging operation and a second charging operation, said first charging operation being to charge said capacitor (C1) using electric power from said first power storage unit (BAT1), said second charging operation being to charge said capacitor (C1) using electric power from said second power storage unit (BAT2),
during said first charging operation, said control device (300) causes said second to fourth opening/closing devices (SMRB2, SMRG2, CHRB1, CHRG1, CHRB2, CHRG2) to be opened, and controls opening/closing of said first opening/closing device (SMRB1, SMRG1, SMRP, R1) so as to form an electric conduction path extending between said first power storage unit (BAT1) and said capacitor (C1) via said precharging relay (SMRP) and said limiting resistor (R1), and
during said second charging operation, said control device (300) controls opening/closing of said first to fourth opening/closing devices (SMRB1, SMRG1, SMRP, R1, SMRB2, SMRG2, CHRB1, CHRG1, CHRB2, CHRG2) so as to form the electric conduction path extending between said second power storage unit (BAT2) and said capacitor (C1) via said precharging relay (SMRP) and said limiting resistor (R1).

3. The power source system according to claim 2, wherein
said first opening/closing device (SMR1, SMRG1, SMRP, R1) further includes a first relay (SMRB1) and a second relay (SMRG 1), said first relay (SMRB1) being connected between one electrode of said first power storage unit (BAT1) and one power line (PL1) of said first pair of power lines (PL1, NL1), said second relay (SMRG1) being connected between the other electrode of said first power storage unit (BAT1) and the other power line (NL1) of said first pair of power lines (PL1, NL1),
said precharging relay (SMRP) and said limiting resistor (R1) are connected to said second relay (SMRG1) in parallel,
said second opening/closing device (SMRB2, SMRG2) includes a third relay (SMRB2) and a fourth relay (SMRG2), said third relay (SMRB2) being connected between one electrode of said second power storage unit (BAT2) and the one power line (PL1) of said first pair of power lines (PL1, NL1), said fourth relay (SMRG2) being connected between the other electrode of said second power storage unit (BAT2) and the other power line (NL1) of said first pair of power lines (PL1, NL1),
said third opening/closing device (CHRB1, CHRG1) includes a fifth relay (CHRB1) and a sixth relay (CHRG1), said fifth relay (CHRB1) being connected between the one electrode of said first power storage unit (BAT1) and one power line (PL3) of said second pair of power lines (PL3, NL3), said sixth relay (CHRG1) being connected between the other electrode of said first power storage unit (BAT1) and the other power line (NL3) of said second pair of power lines (PL3, NL3),
said fourth opening/closing device (CHRB2, CHRG2) includes a seventh relay (CHRB2) and an eighth relay (CHRG2), said seventh relay (CHRB2) being connected between the one electrode of said second power storage unit (BAT2) and the one power line (PL3) of said second pair of power lines (PL3, NL3), said eighth relay (CHRG2) being connected between the other electrode of said second power storage unit (BAT2) and the other power line (NL3) of said second pair of power lines (PL3, NL3), and
during said second charging operation, said control device (300) controls opening/closing of said first to fourth opening/closing devices (SMRB1, SMRG1, SMRP, R1, SMRB2, SMRG2, CHRB1, CHRG1, CHRB2, CHRG2) so as to turn on said third, sixth, and eighth relays (SMRB2, CHRG1, CHRG2) and said precharging relay (SMRP), and turn off said first, second, fourth, fifth, and seventh relays (SMRB1, SMRG1, SMRG2, CHRB1, CHRB2).

4. The power source system according to claim 2, wherein
said first opening/closing device (SMR1, SMRG1, SMRP, R1) further includes a first relay (SMRB1) and a second relay (SMRG 1), said first relay (SMRB1) being connected between one electrode of said first power storage unit (BAT1) and one power line (PL1) of said first pair of power lines (PL1, NL1), said second relay (SMRG1) being connected between the other electrode of said first power storage unit (BAT1) and the other power line (NL1) of said first pair of power lines (PL 1, NL1),
said precharging relay (SMRP) and said limiting resistor (R1) are connected to said second relay (SMRG1) in parallel,
said second opening/closing device (SMRB2, SMRG2) includes a third relay (SMRB2) and a fourth relay (SMRG2), said third relay (SMRB2) being connected between one electrode of said second power storage unit (BAT2) and the one power line (PL1) of said first pair of power lines (PL1, NL1), said fourth relay (SMRG2) being connected between the other electrode of said second power storage unit (BAT2) and the other power line (NL1) of said first pair of power lines (PL1, NL1),
said third opening/closing device (CHRB1, CHRG1) includes a fifth relay (CHRB1) and a sixth relay (CHRG1), said fifth relay (CHRB1) being connected between the one electrode of said first power storage unit (BAT1) and one power line (PL3) of said second pair of power lines (PL3, NL3), said sixth relay (CHRG1) being connected between the other electrode of said first power storage unit (BAT1) and the other power line (NL3) of said second pair of power lines (PL3, NL3),
said fourth opening/closing device (CHRB2, CHRG2) includes a seventh relay (CHRB2) and an eighth relay (CHRG2), said seventh relay (CHRB2) being connected between the one electrode of said second power storage unit (BAT2) and the one power line (PL3) of said second pair of power lines (PL3, NL3), said eighth relay (CHRG2) being connected between the other electrode of said second power storage unit (BAT2) and the other power line (NL3) of said second pair of power lines (PL3, NL3), and
during said second charging operation, said control device (300) controls opening/closing of said first to fourth opening/closing devices (SMRB1, SMRG1, SMRP, R1, SMRB2, SMRG2, CHRB1, CHRG1, CHRB2, CHRG2) so as to turn on said first and fifth to eighth relays (SMRB 1, CHRB 1, CHRG1, CHRB2, CHRG2) and said precharging relay (SMRP), and turn off said second to fourth relays (SMRG1, SMRB2, SMRG2).

5. The power source system according to claim 2, wherein
said first opening/closing device (SMR1, SMRG1, SMRP, R1) further includes a first relay (SMRB1) and a second relay (SMRG1), said first relay (SMRB1) being connected between one electrode of said first power storage unit (BAT1) and one power line (PL1) of said first pair of power lines (PL1, NL1), said second relay (SMRG1) being connected between the other electrode of said first power storage unit (BAT1) and the other power line (NL1) of said first pair of power lines (PL 1, NL1),
said precharging relay (SMRP) and said limiting resistor (R1) are connected to said second relay (SMRG1) in parallel,
said second opening/closing device (SMRB2, SMRG2) includes a third relay (SMRB2) and a fourth relay (SMRG2), said third relay (SMRB2) being connected between one electrode of said second power storage unit (BAT2) and the one power line (PL1) of said first pair of power lines (PL1, NL1), said fourth relay (SMRG2) being connected between the other electrode of said second power storage unit (BAT2) and the other power line (NL1) of said first pair of power lines (PL1, NL1),
said third opening/closing device (CHRB1, CHRG1) includes a fifth relay (CHRB1) and a sixth relay (CHRG1), said fifth relay (CHRB1) being connected between the one electrode of said first power storage unit (BAT1) and one power line (PL3) of said second pair of power lines (PL3, NL3), said sixth relay (CHRG1) being connected between the other electrode of said first power storage unit (BAT1) and the other power line (NL3) of said second pair of power lines (PL3, NL3),
said fourth opening/closing device (CHRB2, CHRG2) includes a seventh relay (CHRB2) and an eighth relay (CHRG2), said seventh relay (CHRB2) being connected between the one electrode of said second power storage unit (BAT2) and said fifth relay (CHRB 1), said eighth relay (CHRG2) being connected between the other electrode of said second power storage unit (BAT2) and said sixth relay (CHRG1), and
during said second charging operation, said control device (300) controls opening/closing of said first to fourth opening/closing devices (SMRB1, SMRG2, SMRP, R1, SMRB2, SMRG2, CHRB1, CHRG1, CHRB2, CHRG2) so as to turn on said third and eighth relays (SMRB2, CHRG2) and said precharging relay (SMRP), and turn off said first, second, fourth, and fifth to seventh relays (SMRB1, SMRG1, SMRG2, CHRB1, CHRG1, CHRB2).

6. The power source system according to claim 1, wherein
said first pair of power lines (PL1, NL1) are disposed between each of said first and second power storage units (BAT1, BAT2) and a load, and
said second pair of power lines (PL3, NL3) are disposed between each of said first and second power storage units (BAT1, BAT2) and a charging device (200) for supplying said first and second power storage units (BAT1, BAT2) with electric power from an external power source.

7. A vehicle comprising:
a power source system; and
a motor (MG2) that receives electric power supplied from the power source system and generates vehicle driving power,
the power source system including:
first and second power storage units (BAT1, BAT2) each configured to be chargeable/dischargeable;
a first pair of power lines (PL1, NL1) to which said first and second power storage units (BAT1, BAT2) are connected in parallel with each other;
a second pair of power lines (PL3, NL3) to which said first and second power storage units (BAT1, BAT2) are connected in parallel with each other;
a first opening/closing device (SMRB1, SMRG1, SMRP, R1) inserted in a path connecting said first power storage unit (BAT1) and said first pair of power lines (PL1, NL1) to each other;
a second opening/closing device (SMRB2, SMRG2) inserted in a path connecting said second power storage unit (BAT2) and said first pair of power lines (PL1, NL1) to each other;
a third opening/closing device (CHRB1, CHRG1) inserted in a path connecting said first power storage unit (BAT1) and said second pair of power lines (PL3, NL3) to each other;
a fourth opening/closing device (CHRB2, CHRG2) inserted in a path connecting said second power storage unit (BAT2) and said second pair of power lines (PL3, NL3) to each other;
a capacitor (C1) connected between said first pair of power lines (PL1, NL1); and
a control device (300) configured to be capable of selectively performing a first charging operation and a second charging operation, said first charging operation being to charge said capacitor (C1) using electric power from said first power storage unit (BAT1), said second charging operation being to charge said capacitor (C1) using electric power from said second power storage unit (BAT2),
said first opening/closing device (SMRB1, SMRG1, SMRP, R1) being configured to include a precharging relay (SMRP) and a limiting resistor (R1) connected in series between said first power storage unit (BAT1) and said first pair of power lines (PL1, NL1), said second opening/closing device (SMRB2, SMRG2) being configured not to include said precharging relay (SMRP) and said limiting resistor (R1) between said second power storage unit (BAT2) and said first pair of power lines (PL1, NL1),
during said first charging operation, said control device (300) causes said second to fourth opening/closing devices (SMRB2, SMRG2, CHRB1, CHRG1, CHRB2, CHRG2) to be opened, and controls opening/closing of said first opening/closing device (SMRB1, SMRG1, SMRP, R1) so as to form an electric conduction path extending between said first power storage unit (BAT1) and said capacitor (C1) via said precharging relay (SMRP) and said limiting resistor (R1), and
during said second charging operation, said control device (300) controls opening/closing of said first to fourth opening/closing devices (SMRB1, SMRG1, SMRP, R1, SMRB2, SMRG2, CHRB1, CHRG1, CHRB2, CHRG2) so as to form an electric conduction path extending between said second power storage unit (BAT2) and said capacitor (C1) via said precharging relay (SMRP) and said limiting resistor (R1).

8. A method for controlling a power source system,
the power source system including:
first and second power storage units (BAT1, BAT2) each configured to be chargeable/dischargeable;
a first pair of power lines (PL1, NL1) to which said first and second power storage units (BAT1, BAT2) are connected in parallel with each other;
a second pair of power lines (PL3, NL3) to which said first and second power storage units (BAT1, BAT2) are connected in parallel with each other;
a first opening/closing device (SMRB1, SMRG1, SMRP, R1) inserted in a path connecting said first power storage unit (BAT1) and said first pair of power lines (PL1, NL1) to each other;
a second opening/closing device (SMRB2, SMRG2) inserted in a path connecting said second power storage unit (BAT2) and said first pair of power lines (PL1, NL1) to each other;
a third opening/closing device (CHRB1, CHRG 1) inserted in a path connecting said first power storage unit (BAT1) and said second pair of power lines (PL3, NL3) to each other;
a fourth opening/closing device (CHRB2, CHRG2) inserted in a path connecting said second power storage unit (BAT2) and said second pair of power lines (PL3, NL3) to each other; and
a capacitor (C1) connected between said first pair of power lines (PL 1, NL1),
said first opening/closing device (SMRB1, SMRG1, SMRP, R1) being configured to include a precharging relay (SMRP) and a limiting resistor (R1) connected in series between said first power storage unit (BAT1) and said first pair of power lines (PL1, NL1), said second opening/closing device (SMRB2, SMRG2) being configured not to include said precharging relay (SMRP) and said limiting resistor (R1) between said second power storage unit (BAT2) and said first pair of power lines (PL1, NL1),
the power source system being configured to be capable of selectively performing a first charging operation and a second charging operation, said first charging operation being to charge said capacitor (C1) using electric power from said first power storage unit (BAT1), said second charging operation being to charge said capacitor (C1) using electric power from said second power storage unit (BAT2),
the method comprising the steps of:
during said first charging operation, causing said second to fourth opening/closing devices (SMRB2, SMRG2, CHRB1, CHRG1, CHRB2, CHRG2) to be opened, and controlling opening/closing of said first opening/closing device (SMRB1, SMRG1, SMRP, R1) so as to form an electric conduction path extending between said first power storage unit (BAT1) and said capacitor (C1) via said precharging relay (SMRP) and said limiting resistor (R1); and
during said second charging operation, controlling opening/closing of said first to fourth opening/closing devices (SMRB1, SMRG1, SMRP, R1, SMRB2, SMRG2, CHRB1, CHRG1, CHRB2, CHRG2) so as to form an electric conduction path extending between said second power storage unit (BAT2) and said capacitor (C1) via said precharging relay (SMRP) and said limiting resistor (R1).
